# EUROPÄISCHE PATENTSCHRIFT

(11) **EP 1 503 168 B1**
(45) Veröffentlichungstag und Bekanntmachung des Hinweises auf die Patenterteilung: **09.08.2006**
(21) Anmeldenummer: 04016321.4
(22) Anmeldetag: 12.07.2004
(51) Int. Cl.: G01B 3/22, G01D 7/00

(54) **Tastmessgerät**
Dial Gauge
Jauge à cadran

(30) Priorität: 29.07.2003 DE 10334505
(43) Veröffentlichungstag der Anmeldung: 02.02.2005
(73) Patentinhaber: Haff & Schneider GmbH & Co. OHG, 87484 Nesselwang (DE)
(72) Erfinder: Mörz, Fridolin, 87484 Nesselwang (DE)
(74) Vertreter: Munk, Ludwig

(56) Entgegenhaltungen:
- EP-A- 0 107 338
- EP-A- 1 022 539
- DE-A- 3 440 221
- DE-A- 3 701 730

## Beschreibung

Die Erfindung betrifft ein Tastmessgerät, insbesondere zum Antasten von Werkstücken in Werkzeugmaschinen, mit einem radial und/oder axial auslenkbaren Tastkopf, dessen Auslenkung mittels eines Umsetzsystems in eine lineare Bewegung eines Schiebers umsetzbar ist, der mit einer einer Anzeigeeinrichtung zugeordneten Betätigungseinrichtung zusammenwirkt.

Ein Gerät dieser Art ist aus der DE 37 01 730 C2 bekannt. Bei dieser bekannten Anordnung ist die Anzeigeeinrichtung als analoge Anzeigeeinrichtung ausgebildet, die ein mit einem bewegbaren Zeiger zusammenwirkendes Zifferblatt aufweist. Die Betätigungseinrichtung ist als den Zeiger betätigende Mechanik ausgebildet. Nachteilig dabei ist, dass sich ein genaues Ablesen der Zeigerstellung erfahrungsgemäß als sehr schwierig erweist und in der Regel eine große Nähe der ablesenden Person zur Anzeigeeinrichtung erfordert. Außerdem kann das Ablesen analoger Anzeigeeinrichtungen zu vom individuellen Blickwinkel der ablesenden Person etc. abhängigen Fehlern führen.

Es sind in der Praxis auch schon Tastmessgeräte mit rein numerischer Anzeige gebräuchlich. Diese ermöglichen zwar eine genaue Ablesung. Nachteilig dabei ist jedoch, dass eine Ablesung nur im Stillstand möglich ist, da sich der angezeigte Wert während eines Anfahrvorgangs mit einer für das menschliche Auge nicht auflösbaren Geschwindigkeit ändert.

Die EP-A-0107 338 zeigt ein Tastmessgerät oben genannter Art, bei dem die Anzeigeeinrichtung eine numerische Anzeige und eine grafische Anzeige aufweist und die der Anzeigeeinrichtung zugeordnete Betätigungseinrichtung eine elektronische Recheneinrichtung sowie eine dieser vorgeordnete, eine elektrische Ausgangsgröße erzeugende Wegmesseinrichtung mit zwei relativ zueinander bewegbaren Elementen enthält, wobei ein Element am Schieber angebracht und das andere, demgegenüber stationär angeordnete Element mit seinem Ausgang am Eingang der elektronischen Recheneinrichtung liegt, welche die Steuersignale für die numerische Anzeige und die grafische Anzeige der Anzeigeeinrichtung erzeugt, wobei der Rechner so eingerichtet ist, dass die Auflösung der vom Schieber zurückgelegten Wegstrecke auf der grafischen Anzeige mit Annäherung des Tastkopfes an den Nullpunkt zunimmt.

Die bekannten Anordnungen erweisen sich dementsprechend als nicht benutzerfreundlich genug.

Hiervon ausgehend ist es daher die Aufgabe der vorliegenden Erfindung, ein Tastmessgerät eingangs erwähnter Art mit einfachen und kostengünstigen Mitteln so zu verbessern, dass eine hohe Benutzerfreundlichkeit erreicht wird.

Diese Aufgabe wird erfindungsgemäß dadurch gelöst, dass die grafische Anzeige aus mehreren, nebeneinander angeordneten, parallelen Leuchtbalken besteht, die jeweils einer Wegstrecke des Schiebers zugeordnet sind, und wobei der Rechner so eingerichtet ist, dass die Länge der jeweils einem Leuchtbalken zugeordneten Wegstrecke des Schiebers zur Erhöhung der Auflösung mit Annäherung des Tastkopfes an den Nullpunkt abnimmt.

Mit diesen Maßnahmen werden die Nachteile der bekannten Anordnung unter Beibehaltung ihrer Vorteile vollständig vermieden.

Die grafische Anzeige stellt praktisch eine quasianaloge Anzeige dar, die auch im Verlauf eines Anfahrvorgangs ohne Unterbrechung der Anfahrbewegung zuverlässig abgelesen werden kann. Dadurch, dass die Auflösung der vom Schieber zurückgelegten Wegstrecke auf der grafischen Anzeige mit Annäherung des Tastkopfes an den Nullpunkt zunimmt, ergibt sich in vorteilhafter Weise eine nichtlineare Wegdarstellung mit mit Annäherung an den Nullpunkt progressiv zunehmender Auflösung. Die erfindungsgemäßen Maßnahmen ermöglichen daher eine schnelle und sinnfällige Verfolgung des Antastvorgangs über den gesamten Messweg, wobei durch die mit zunehmender Annäherung an den Nullpunkt progressiv zunehmende Auflösung der Wegstrecke die Genauigkeit der Abschätzbarkeit der Entfernung des Tastkopfes von der erwünschten Endposition mit zunehmender Annäherung an diese Position laufend erhöht und damit ein genaues und blitzschnelles Auffinden des Nullpunkts ermöglicht. Eine Unterbrechung des Anfahrvorgangs zum Zwecke der Ablesung ist hier in vorteilhafter Weise nicht erforderlich. Die gleichzeitig vorgesehene numerische Anzeige liefert im Stillstand einen exakten Zahlenwert, der nicht nur fehlerfrei abgelesen werden kann, sondern auch auf die Steuerung der Werkzeugmaschine übertragen werden kann. Die erfindungsgemäßen Maßnahmen ermöglichen daher eine schnelle und sichere Durchführung von Antastvorgängen, was die Rüstzeiten von Werkzeugmaschinen verkürzt und dementsprechend die Maschinenlaufzeiten verlängert und so zu einer ausgezeichneten Wirtschaftlichkeit führt.

Vorteilhafte Ausgestaltungen und zweckmäßige Fortbildungen der übergeordneten Maßnahmen sind in den abhängigen Ansprüchen angegeben. So kann die Wegmesseinrichtung zweckmäßig so ausgebildet sein, dass sie schrittabhängige Ausgangssignale erzeugt. Zur Definition der exakten Position des Tastkopfes ist es dabei lediglich erforderlich, die zurückgelegten Schritte zu zählen. Dies erleichtert die Erzeugung digitaler Daten.

Zweckmäßig ist daher am Eingang der elektronischen Recheneinrichtung ein Zähler vorgesehen, der die Schritte des bewegbaren Elements der Wegmesseinrichtung zählt. Auf diese Weise ergeben sich der Position des Messkopfes entsprechende digitale Daten.

Dem Zähler ist vorteilhaft ein zweckmäßig als Mikroprozessor ausgebildeter Rechner nachgeordnet, der zwei Ausgänge für die der numerischen Anzeige und die der grafischen Anzeige zugeordneten Steuersignale enthält. Der Mikroprozessor ermöglicht in vorteilhafter Weise eine einfache, softwaremäßige Anpassung an die Bedürfnisse des Einzelfalls. Die erwünschte Zunahme der Auflösung der vom Schieber zurückgelegten Wegstrecke auf der grafischen Anzeige mit Annäherung des Tastkopfes an den Nullpunkt zunimmt lässt sich hierbei einfach dadurch erreichen, dass der Rechner so eingerichtet ist, dass die Auflösung der vom Schieber zurückgelegten Wegstrecke auf der grafischen Anzeige mit Annäherung des Tastkopfes an den Nullpunkt zunimmt.

Vorteilhaft kann die grafische Anzeige aus mehreren, nebeneinander angeordneten, parallelen Leuchtbalken bestehen, die jeweils einer Wegstrecke des Schiebers zugeordnet sind. Auf diese Weise lässt sich auf digitalem Wege eine besonders sinnfällige, grafische Anzeige erreichen, was sich ebenfalls vorteilhaft auf die Benutzerfreundlichkeit und Genauigkeit auswirkt. Zweckmäßig kann dabei die jeweils einem Leuchtbalken zugeordnete Wegstrecke des Schiebers mit Annäherung an den Nullpunkt abnehmen, was eine einfache Verwirklichung der oben erwähnten stärkeren Auflösung im Nullpunktbereich ergibt.

In einer besonders vorteilhaften Ausgestaltung der übergeordneten Maßnahmen kann das stationäre Element der Wegmesseinrichtung eine Leiterplatte enthalten, auf der die Organe der elektronischen Recheneinrichtung aufgenommen sind und die Anschlüsse für eine neben der Anzeigeeinrichtung angeordnete Stromquelle aufweist. Diese Maßnahme ergeben eine sehr kompakte Bauweise mit einer einfachen Vormontage der elektronischen Recheneinrichtung.

Die vorstehend genannte Bauweise wird dadurch unterstützt, dass die Wegmesseinrichtung als Kondensatoranordnung mit zwei gegeneinander verschiebbaren Kondensatorplatten ausgebildet ist. Hiermit lassen sich auf einfache Weise schrittabhängige Ausgangssignale erzeugen.

Weitere vorteilhafte Ausgestaltungen und zweckmäßige Fortbildungen der übergeordneten Maßnahmen sind in den restlichen abhängigen Ansprüchen angegeben und aus der nachstehenden Beispielsbeschreibung anhand der Zeichnung näher entnehmbar.

In der nachstehend beschriebenen Zeichnung zeigen:
- Figur 1: eine Ansicht eines erfindungsgemäßen Tastmessgeräts,
- Figur 2: einen Vertikalschnitt durch die Anordnung gemäß Fig. 1,
- Figur 3: ein Blockschaltbild der der Anzeigeeinrichtung zugeordneten Betätigungseinrichtung des erfindungsgemäßen Tastmessgeräts und
- Figur 4: eine vergrößerte Darstellung des Displays der Anzeigeeinrichtung der Anordnung gemäß Fig. 1.

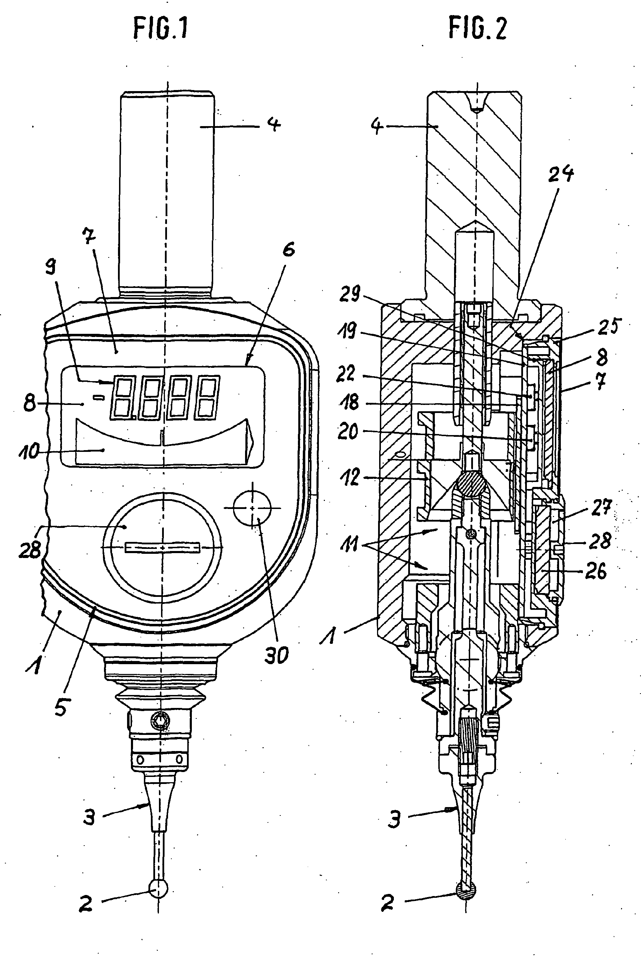

Das in den Figuren 1 und 2 dargestellte Tastmessgerät besitzt einen aus einem Gehäuse 1 herausragenden, mit einer kugelförmigen Tastspitze 2 versehenen Tastkopf 3 zum Antasten von Definitionskanten eines in einer Werkstückhalterung einer Werkzeugmaschine eingespannten Werkstücks. Das Gehäuse 1 ist mit einem Zapfen 4 zum Einspannen des Tastmessgeräts in der Werkzeughalterung der Werkzeugmaschine versehen. Der Tastkopf 3 kann radial und/oder axial ausgelenkt werden. Im dargestellten Beispiel ist der Tastkopf 3 radial und axial auslenkbar, was eine dreidimensionale Abtastung eines Werkstücks ermöglicht.

Das Gehäuse 1 ist im Bereich seiner dem Betrachter zugewandten Gehäuseseite mit einer fensterartigen Öffnung 5 versehen, in der sich eine von außen ablesbare Anzeigeeinrichtung 6 befindet. Die Öffnung 5 ist durch eine durchsichtige, beispielsweise aus Glas bestehende Abdeckplatte 7 nach außen verschlossen.

Die Anzeigeeinrichtung 6 ist als digitale Anordnung ausgebildet, die ein Display 8, auf dem zwei einander benachbarte, hier untereinander angeordnete Anzeigezeilen eingerichtet sind, enthält. Die obere Zeile ist hier als numerische Anzeige 9 ausgebildet. Die untere Zeile ist als quasianaloge, grafische Anzeige 10 ausgebildet. Die numerische Anzeige 9 liefert einen exakten Zahlenwert, der der Momentanstellung des Tastkopfes 3 entspricht. Die grafische Anzeige 10 liefert eine dem Zahlenwert praktisch analoge Darstellung.

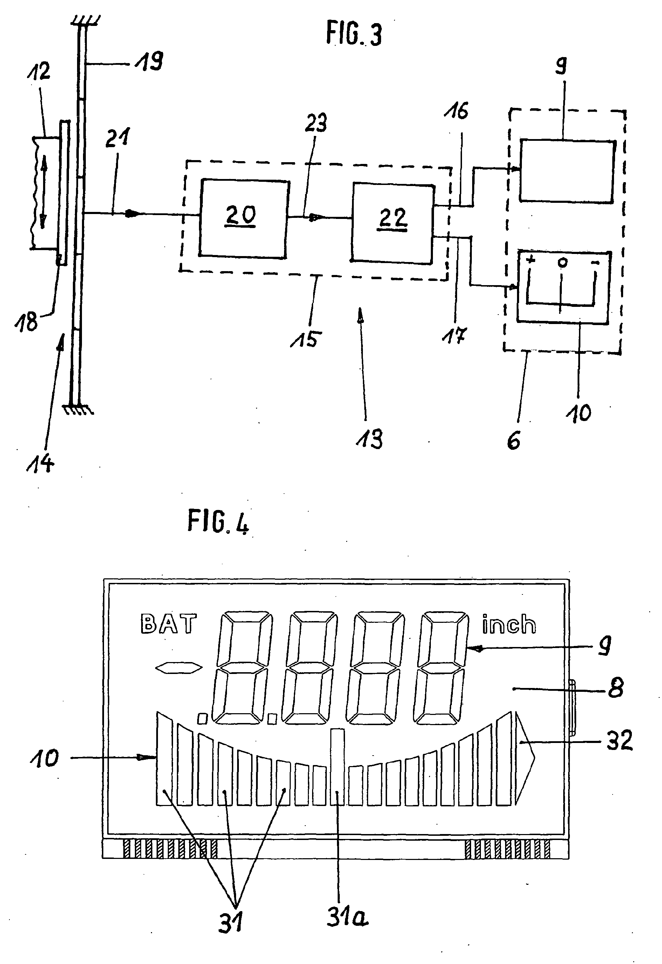

Die Auslenkung des Tastkopfes 3 wird durch ein in Figur 2 dargestelltes, an sich bekanntes Umsetzsystem 11 in eine Linearbewegung eines im Gehäuse 1 verschiebbar, hier axial verschiebbar, gelagerten Schiebers 12 umgesetzt, der mit einer der Anzeigeeinrichtung 6 zugeordneten, in Figur 3 näher dargestellten Betätigungseinrichtung 13 zusammenwirkt. Die Betätigungseinrichtung 13 enthält, wie Figur 3 zeigt, eine Wegmesseinrichtung 14, die eine elektrische, vom Verschiebeweg des Schiebers 12 abhängige Ausgangsgröße erzeugt. Der Wegmesseinrichtung 14 ist eine elektronische Recheneinrichtung 15 nachgeordnet, deren Eingang mit dem Ausgang der Wegmesseinrichtung 14 verbunden ist und die dementsprechend das Ausgangssignal der Wegmesseinrichtung erhält.

Durch die elektronische Recheneinrichtung 15 werden anhand der von der Wegmesseinrichtung 14 kommenden Signale die zur Steuerung der numerischen Anzeige 9 und der grafischen Anzeige 10 der Anzeigeeinrichtung 6 benötigten, digitalen Steuersignale erzeugt. Die elektronische Recheneinrichtung 15 besitzt dementsprechend zwei Ausgänge 16, 17, die jeweils einer Kategorie von digitalen Schaltsignalen zugeordnet und mit der jeweils zugeordneten Anzeige 9 bzw. 10 der Anzeigeeinrichtung 6 verbunden sind. Da die numerische Anzeige 9 und die grafische Anzeige 10 auf digitaler Basis arbeiten, kann die elektronische Recheneinrichtung 15 die Steuersignale für beide Anzeigen 9 und 10 erzeugen.

Die Wegmesseinrichtung 14 enthält, wie Figur 3 weiter erkennen lässt, zwei relativ zueinander bewegbare Elemente 18, 19. Das Element 18 ist, wie Figur 2 zeigt, am Schieber 12 angebracht und dementsprechend verschiebbar. Das andere Element 19 ist am Gehäuse 1 abgestützt und daher gegenüber dem schieberseitigen Element 18 stationär. Die beiden gegeneinander bewegbaren Elemente 18, 19 der Wegmesseinrichtung 14 sind als zueinander parallele Kondensatorplatten ausgebildet, die bei gleichbleibendem Abstand parallel zueinander verschiebbar sind. Die Wegmesseinrichtung 14 ist dementsprechend als Kondensatoranordnung mit in ihrer Ebene parallel zueinander verschiebbaren Kondensatorplatten ausgebildet. Durch diese Kondensatoranordnung wird ein von der vom Schieber 12 zurückgelegten Wegstrecke abhängiges, elektrisches Ausgangssignal erzeugt, wobei die Wegstrecke in kleine Schritte unterteilt wird, die im Ausgangssignal der Wegmesseinrichtung erkennbar sind.

Die elektronische Recheneinrichtung 15 enthält, wie aus Figur 3 entnehmbar ist, einen an ihrem Eingang angeordneten Zähler 20, dessen den Eingang der elektronischen Recheneinrichtung 15 bildender Eingang mit dem vom stationären Element 19 der Wegmesseinrichtung 14 abgehenden Ausgang der Wegmesseinrichtung 14 verbunden ist und dementsprechend die von der Wegmesseinrichtung 14 erzeugten Signale erhält, wie durch den Signalflusspfeil 21 angedeutet ist. Der Zähler 20 ist so ausgebildet, dass hierdurch die von der Wegmesseinrichtung 14 erzeugten, schrittabhängigen Ausgangssignale gezählt werden. Jedem Schrittsignal ist eine bestimmte Wegstrecke zugeordnet, so dass sich anhand der Zahl der Schritte die gesamte, zurückgelegte Wegstrecke ergibt.

Die elektronische Recheneinrichtung 15 enthält ferner einen dem Zähler 20 nachgeordneten Rechner 22, in den die Ausgangswerte des Zählers 20 eingegeben werden, wie durch den Signalflusspfeil 23 angedeutet ist. Der Rechner 22 ist so eingerichtet, dass er anhand der eingegebenen Schrittzahlen die gewünschten Steuersignale für die numerische Anzeige 9 und die grafische Anzeige 10 der Anzeigevorrichtung 6 erzeugen kann. Im dargestellten Beispiel ist der Rechner 22 mit zwei Ausgängen versehen, die den Ausgängen 16, 17 der elektronischen Recheneinrichtung 15 entsprechen. Der Rechner 22 ist zweckmäßig als mit einem Speicher versehener Mikroprozessor ausgebildet, der programmierbar ist, was eine hohe Vielseitigkeit ergibt.

Das dem Schieber 12 zugeordnete Element 18 der Wegmesseinrichtung 14 kann durch eine Klebverbindung oder dergleichen am Schieber 12 befestigt sein. Das stationäre Element 19 ist im Bereich der gehäuseseitigen Öffnung 5 angeordnet, die, wie aus Figur 2 ersichtlich ist, mit einer von der Gehäuseaußenseite beabstandeten Stufe 24 versehen ist. Das plattenförmige Element 19 ist auf die Stufe 24 aufgelegt und wird durch einen in die Öffnung 5 eingreifenden Fixierrahmen 25 fixiert, der die oben bereits erwähnte, durchsichtige Platte 7 trägt.

Das auf seiner dem bewegbaren Element 18 zugewandten Seite als Kondensatorplatte ausgebildete Element 19 ist rückseitig zweckmäßig als Leiterplatte ausgebildet, auf der die Organe der elektronischen Recheneinrichtung 15 aufgenommen sind, wie in Figur 2 angedeutet ist und die Anschlüsse für eine als Stromquelle 26 fungierende Batterie etc. aufweist. Die die Stormquelle 26 bildende Batterie ist in eine zugeordnete Kammer 27 des Fixierrahmens 25 eingelegt und hierin durch einen anbringbaren Deckel 28 fixierbar. Die Stromquelle befindet sich, wie aus Figur 1 hervorgeht, unterhalb der Anzeigeeinrichtung 6.

Die auf der vorstehend erwähnten Leiterplatte aufgenommenen Organe der elektronischen Recheneinrichtung 15 sind von einer elastischen Andrückkappe 29 übergriffen und durch diese hindurch mit dem das Display 8 der Anzeigeeinrichtung 6 bildenden, elektronischen Bauteil kontaktiert, so dass eine Verdrahtung etc. entfällt. Das Display 8, das mit Abstand parallel zum plattenförmigen Element 19 angeordnet ist, ist im Fixierrahmen 25 aufgenommen, der eine dem Display 8 zugeordnete, fensterförmige Ausnehmung aufweist, die rückwärtig vom Display 8 ausgefacht wird und von der durchsichtigen Schutzscheibe übergriffen wird.

Die an das plattenförmige Element 19 der Wegmesseinrichtung 14 angeformte Leiterplatte erstreckt sich, wie aus Figur 2 ersichtlich ist, auch unterhalb der der Stromquelle 26 zugeordneten Kammer 27 des Fixierrahmens 25 hindurch und kann daher durch den Kammerboden hindurch auch direkt mit der Stromquelle 26 kontaktiert werden, die den Betriebsstrom für die Wegmesseinrichtung 14, die elektronische Recheneinrichtung 15 und die Anzeigeeinrichtung 6 liefert. Die Stromversorgung dieser Organe ist mittels eines im Bereich der Öffnung 5 des Gehäuses angeordneten Tastschalters 30 ein- und ausschaltbar, durch den ein auf der Leiterplatte angeordneter Minischalter betätigbar ist. Die Leiterplatte untergreift auch den Tastschalter 30, so dass eine direkte Betätigung des auf der Leiterplatte aufgenommenen Minischalters möglich ist.

Das Display 8 der Anzeigeeinrichtung 6 enthält der numerischen Anzeige 9 und der grafischen Anzeige 10 zugeordnete Leuchtdioden. Die grafische Anzeige 10 enthält, wie am besten aus Figur 4 erkennbar ist, mehrere, nebeneinander angeordnete, parallele Leuchtbalken 31. Diese können direkt aneinander anschließen oder, wie im dargestellten Beispiel leicht beabstandet sein und bilden zusammen einen Anzeigestreifen mit veränderlicher Länge. Jeder Leuchtbalken 31 ist einer Wegstrecke des Schiebers 12 zugeordnet. In einfachen Fällen können die den Leuchtbalken 31 zugeordneten Wegstrecken gleich sein. Zweckmäßig ist der Rechner 22 jedoch so eingerichtet, das heißt der den Rechner 22 bildende Mikroprozessor so programmiert, dass die einem Balken jeweils zugeordnete Wegstrecke um so kleiner ist, je näher der Tastkopf 3 am Nullpunkt ist, der erreicht ist, wenn die Achse der Maschinenspindel exakt über der angetasteten Kante sich befindet. Auf diese Weise nimmt die Auflösung der vom Schieber 12 zurückgelegten Wegstrecke mit Annäherung an den Nullpunkt zu. Dies erhöht die erzielbare Genauigkeit und erleichtert die Beobachtung während der Durchführung des Antastvorgangs, so dass dieser vergleichsweise schnell beendet werden kann.

Die Höhe der Leuchtbalken 31 nimmt vom Rand zur Mitte hin ab, wodurch der kleiner werdende Abstand vom Nullpunkt angedeutet wird. Der mittlere Leuchtbalken 31a, der durch seine Höhe gegenüber den benachbarten Leuchtbalken hervorgehoben ist, entspricht dem Nullpunkt bzw. dem Nullpunktbereich. Dieser Bereich kann so klein gewählt sein, dass er innerhalb der zugelassenen Toleranzen liegt. Der exakte Wert wird durch die numerische Anzeige 9 angezeigt und kann im Stillstand des Tastkopfes 3 abgelesen werden. An den Enden der durch die Leuchtbalken 31 gebildeten Balkenreihe können im dargestellten Beispiel durch einen Pfeil 32 angedeutete Zeichen vorgesehen sein, die aufleuchten, solange sich der Tastkopf 3 außerhalb des auf der grafischen Anzeige 10 abgebildeten Bereichs befindet.

## Patentansprüche

1. Tastmessgerät, insbesondere zum Antasten von Werkstücken in Werkzeugmaschinen, mit einem radial und/oder axial auslenkbaren Tastkopf (3), dessen Auslenkung mittels eines Umsetzsystems (11) in eine lineare Bewegung eines Schiebers (12) umsetzbar ist, der mit einer einer Anzeigeeinrichtung (6) zugeordneten Betätigungseinrichtung (13) zusammenwirkt, wobei die Anzeigeeinrichtung (6) eine numerische Anzeige (9) und eine grafische Anzeige (10) aufweist und die der Anzeigeeinrichtung (6) zugeordnete Betätigungseinrichtung (13) eine elektronische Recheneinrichtung (15) sowie eine dieser vorgeordneten, eine elektrische Ausgangsgröße erzeugende Wegmesseinrichtung (14) mit zwei relativ zueinander bewegbaren Elementen (18, 19) enthält, von denen ein Element (18) am Schieber angebracht ist, und das Andere, demgegenüber stationär angeordnete Element (19) mit seinem Ausgang am Eingang der elektronischen Recheneinrichtung (15) liegt, die die Steuersignale für die numerische Anzeige (9) und die grafische Anzeige (10) der Anzeigeeinrichtung (6) erzeugt, **dadurch gekennzeichnet, dass** die grafische Anzeige (10) aus mehreren, nebeneinander angeordneten, parallelen Leuchtbalken (31) besteht, die jeweils einer Wegstrecke des Schiebers (12) zugeordnet sind, und wobei der Rechner (22) so eingerichtet ist, dass die Länge der jeweils einem Leuchtbalken (31) zugeordneten Wegstrecke des Schiebers (12) zur Erhöhung der Auflösung mit Annäherung des Tastkopfes (3) an den Nullpunkt abnimmt.

2. Tastmessgerät nach Anspruch 1, **dadurch gekennzeichnet, dass** die Wegmesseinrichtung (14) schrittabhängige Ausgangssignale erzeugt und dass am Eingang der elektronischen Recheneinrichtung (15) ein Zähler (20) angeordnet ist, der die Schritte der Wegmesseinrichtung (14) zählt.

3. Tastmessgerät nach Anspruch 2, **dadurch gekennzeichnet, dass** dem Zähler (20) ein als Mikroprozessor ausgebildeter Rechner (22) nachgeordnet ist, der zwei Ausgänge (16, 17) für die der numerischen Anzeige (9) und die der grafischen Anzeige (10) zugeordneten Steuersignale enthält.

4. Tastmessgerät nach einem der vorhergehenden Ansprüche, **dadurch gekennzeichnet, dass** die Höhe der Leuchtbalken (31) vom Rand zum mittleren, dem Nullpunkt entsprechenden Leuchtbalken (31 a) hin abnimmt.

5. Tastmessgerät nach Anspruch 4, **dadurch gekennzeichnet, dass** der mittlere Leuchtbalken (31 a) höher als die benachbarten Leuchtbalken (31) ist.

6. Tastmessgerät nach einem der vorhergehenden Ansprüche, **dadurch gekennzeichnet, dass** das stationäre Element (19) der Wegmesseinrichtung (14) eine Leiterplatte enthält, auf der die Organe der elektronischen Recheneinrichtung (15) aufgenommen sind und die Anschlüsse für eine der Anzeigeeinrichtung (6) benachbarte Stromquelle (26) aufweist.

7. Tastmessgerät nach Anspruch 6, **dadurch gekennzeichnet, dass** die Stromversorgung mittels eines der Anzeigeeinrichtung (6) benachbarten, von der Leiterplatte des stationären Elements (19) untergriffenen Tastschalters (30) aktivierbar bzw. passivierbar ist, durch den ein vorzugsweise auf der Leiterplatte angeordneter Minischalter betätigbar ist.

8. Tastmessgerät nach einem der vorhergehenden Ansprüche, **dadurch gekennzeichnet, dass** die Wegmesseinrichtung (14) als Kondensatoranordnung ausgebildet ist und dass die gegeneinander bewegbaren Elemente (18, 19) als unter Beibehaltung ihres gegenseitigen Abstands parallel zueinander verschiebbare Kondensatorplatten ausgebildet sind.

9. Tastmessgerät nach einem der vorhergehenden Ansprüche, **dadurch gekennzeichnet, dass** die Anzeigeeinrichtung (6) ein Display (8) mit zwei vorzugsweise untereinander angeordneten, der numerischen Anzeige (9) und der grafischen Anzeige (10) zugeordneten Zeilen aufweist.

10. Tastmessgerät nach einem der vorhergehenden Ansprüche, **dadurch gekennzeichnet, dass** ein den Tastkopf (3) tragendes Gehäuse (1) im Bereich einer Gehäuseseite eine fensterförmige Öffnung (5) aufweist, innerhalb der die Anzeigeeinrichtung (6) sowie die Stromquelle (26) und der Tastschalter (30) vorgesehen sind und dass die das stationäre Element (19) der Wegmesseinrichtung (14) bildende Platte in eine im Bereich des Rands der Öffnung (5) des Gehäuses (1) vorgesehene Stufe (24) eingelegt und durch einen in die Öffnung (5) eingreifenden Fixierrahmen (25) fixiert ist, der eine das Display (8) übergreifende, durchsichtige Platte (7) trägt und eine der Stromquelle (26) zugeordnete, durch einen Deckel (28) verschließbare Kammer (27) sowie eine dem Tastschalter (30) zugeordnete Ausnehmung enthält.

## Claims

1. A dial gauge, in particular for probing workpieces on machine tools, having a radially and/or axially deflectable probe head (3) whose deflection is convertible by a conversion system (11) into a linear motion of a slide (12) which latter interacts with an actuating device (13) associated with a display unit (6), with the display unit (6) comprising a numerical display unit (9) and a graphic display unit (10), and further with the actuating device (13) associated with the display unit (6) comprising an electronic computing device (15) and, upstream thereof, a displacement measuring system (14) generating an electric output variable comprising two elements (18, 19) which are movable relative to each other, with one element (18) mounted on the slide and the other element (19) arranged in a firm position relative to the slide and having its output connected to the input of the electronic computing device (15) which generates the control signals for the numerical display (9) and the graphic display (10) of the display unit (6), **characterised in that** the graphic display (10) comprises several parallel luminous bars (31) disposed side by side, each one of such luminous bars being associated with a certain distance travelled by the slide (12), and with the computer (22) being arranged in such a manner that, for the purpose of increasing the resolution, the length of the distance travelled by the slide associated with each of the luminous bars (31) decreases as the probe head (3) moves toward the zero point.

2. A dial gauge according to Claim 1, **characterised in that** the displacement measuring system (14) generates increment-based output signals and that a counter (20) is provided at the input of the electronic computing device (15) which counts the increments of the displacement measuring system (14).

3. A dial gauge according to claim 2, **characterised in that** downstream of the counter (20) provision is made for a computer (22) which is designed as a microprocessor and comprises two outputs (16, 17) for luminous bars the numerical display unit (9) and for the control signals associated with the graphic display (10).

4. A dial gauge according to any of the preceding claims, **characterised in that** the height of the luminous bars (31) decreases from the outside towards the middle luminous bar (31 a) which corresponds to the zero point.

5. A dial gauge according to claim 4, **characterised in that** the middle luminous bar (31 a) is higher than the neighbouring light beams (31).

6. A dial gauge according to any of the preceding claims, **characterised in that** the stationary element (19) of the displacement measuring system (14) comprises a printed circuit board accommodating the elements of the electronic computing device (15) and such printed circuit board is provided with the connections for a power source (26) adjacent to the display unit (6).

7. A dial gauge according to claim 6, **characterised in that** the power supply can be turned on or off by means of a momentary contact switch (30) disposed adjacent to the display unit (6), and underneath which extends the printed circuit board of the stationary element (19), such momentary contact switch (30) actuating a miniature switch which is preferably disposed on the printed circuit board.

8. A dial gauge according to any of the preceding claims, **characterised in that** the displacement measuring system (14) is designed as a capacitor arrangement and that the elements (18, 19) which are movable relative to each other are designed as capacitor plates which are movable parallel to each other while their mutual distance is maintained.

9. A dial gauge according to any of the preceding claims, **characterised in that** the display unit (6) is provided with a display (8) having two rows which are preferably arranged one below the other and associated with the numerical display (9) and the graphic display (10), respectively.

10. A dial gauge according to any of the preceding claims, **characterised in that** the housing (1) carrying the touch probe (3), in the area of one side thereof, comprises a window-type opening (5) wherein provision is made for the display unit (6), the power source (26) and the momentary contact switch (30), and that the plate forming the stationary element (19) of the displacement measuring system (14) is inserted into a recessed step (24) which is provided in the area of the rim of the opening (5) of the housing (1) and fixed by a fixing frame (25) extending into such opening (5), which fixing frame (25) carries a transparent plate (7) extending over and across the display (8) and comprises a chamber (27) which is closable by a cover (28) and associated with the power source (26) and further comprises a recess associated with the momentary contact switch (30).

## Revendications

1. Jauge à cadran, en particulier pour le palpage de pièces dans des machines-outils, comprenant une tête de palpage (3) qui peut être déviée radialement et/ou axialement et dont la déviation peut être transformée au moyen d'un système de transformation (11) en un mouvement linéaire d'un coulisseau (12) qui agit de concert avec un dispositif de manoeuvre (13) associé à un dispositif indicateur (6), ledit dispositif indicateur (6) présentant un affichage numérique (9) et un affichage graphique (10), et ledit dispositif de manoeuvre (13) qui est associé au dispositif indicateur (6) comprenant un dispositif électronique de calcul (15) ainsi qu'un dispositif de mesure de déplacement (14) qui est placé en amont de ce dernier, crée une grandeur électrique de sortie et comporte deux éléments (18, 19) déplaçables l'un par rapport à l'autre dont un élément (18) est monté sur ledit coulisseau et dont l'autre élément (19) disposé de façon stationnaire par rapport à ce dernier est appliqué avec sa sortie à l'entrée du dispositif électronique de calcul (15) qui génère les signaux de commande pour l'affichage numérique (9) et pour l'affichage graphique (10) du dispositif indicateur (6), **caractérisée par le fait que** l'affichage graphique (10) se compose de plusieurs barres lumineuses (31) parallèles disposées les unes à côté des autres qui sont associées respectivement à une distance du coulisseau (12), et le calculateur (22) étant aménagé de telle manière que la longueur de la distance du coulisseau (12) qui est associée respectivement à une barre lumineuse (31) diminue au fur et à mesure que la tête de palpage (3) s'approche du point zéro, afin d'augmenter la résolution.

2. Jauge à cadran selon la revendication 1, **caractérisée par le fait que** ledit dispositif de mesure de déplacement (14) génère des signaux de sortie dépendant des pas et qu'un compteur (20) qui compte les pas du dispositif de mesure de déplacement (14) est disposé à l'entrée du dispositif électronique de calcul (15).

3. Jauge à cadran selon la revendication 2, **caractérisée par le fait qu'**un calculateur (22) réalisé comme microprocesseur est disposé à la suite du compteur (20), ledit calculateur comprenant deux sorties (16, 17) pour les signaux de commande associés à l'affichage numérique (9) et pour ceux associés à l'affichage graphique (10).

4. Jauge à cadran selon l'une des revendications précédentes, **caractérisée par le fait que** les barres lumineuses (31) présentent une hauteur qui diminue depuis le bord vers la barre lumineuse de milieu (31 a) correspondant au point zéro.

5. Jauge à cadran selon la revendication 4, **caractérisée par le fait que** la hauteur de la barre lumineuse de milieu (31 a) est supérieure à celle des barres lumineuses voisines (31).

6. Jauge à cadran selon l'une des revendications précédentes, **caractérisée par le fait que** l'élément stationnaire (19) du dispositif de mesure de déplacement (14) comprend une carte de circuits imprimés sur laquelle sont reçus les organes du dispositif électronique de calcul (15) et qui présente des bornes pour une source de courant (26) voisine du dispositif indicateur (6).

7. Jauge à cadran selon la revendication 6, **caractérisée par le fait que** la source d'alimentation électrique est activable ou bien passivable au moyen d'un interrupteur à bouton-poussoir (30) voisin du dispositif indicateur (6), au-dessous duquel est disposée la carte de circuits imprimés de l'élément stationnaire (19) et par le biais duquel peut être actionné un mini-interrupteur disposé de préférence sur la carte de circuits imprimés.

8. Jauge à cadran selon l'une des revendications précédentes, **caractérisée par le fait que** le dispositif de mesure de déplacement (14) est réalisé en tant que disposition à condensateur, et que les éléments (18, 19) pouvant être déplacés l'un par rapport à l'autre sont réalisés comme plaques de condensateur qui, tout en maintenant leur distance réciproque, peuvent être déplacées parallèlement l'une par rapport à l'autre.

9. Jauge à cadran selon l'une des revendications précédentes, **caractérisée par le fait que** le dispositif indicateur (6) présente un dispositif d'affichage (8) comprenant deux lignes disposées de préférence l'une au-dessous de l'autre et associées à l'affichage numérique (9) et à l'affichage graphique (10).

10. Jauge à cadran selon l'une des revendications précédentes, **caractérisée par le fait qu'**un boîtier (1) portant ladite tête de palpage (3) présente au niveau de l'un de ses côtés une ouverture (5) en forme de fenêtre à l'intérieur de laquelle sont prévus le dispositif indicateur (6) ainsi que la source de courant (26) et l'interrupteur à bouton-poussoir (30), et que la plaque formant l'élément stationnaire (19) du dispositif de mesure de déplacement (14) est insérée dans un gradin (24) prévu au niveau du bord de l'ouverture (5) du boîtier (1) et est fixée par le biais d'un cadre de fixation (25) engagé dans l'ouverture (5), ledit cadre de fixation portant une plaque transparente (7) qui recouvre le dispositif d'affichage (8) et comprenant une chambre (27) qui est associée à la source de courant (26) et peut être fermée par un couvercle (28) ainsi qu'un évidement qui est associé à l'interrupteur bouton-poussoir (30).
